# EUROPEAN PATENT APPLICATION

(11) **EP 1 372 056 A1**
(43) Date of publication of application: **17.12.2003**
(21) Application number: 02713179.6
(22) Date of filing: 20.03.2002
(51) Int. Cl.: G06F 3/00, G06F 3/033, H04M 1/247, H04M 1/23

(54) **MOBILE COMMUNICATION TERMINAL**

(30) Priority: 23.03.2001 JP 2001085313
(71) Applicant: Matsushita Electric Industrial Co., Ltd., Kadoma-shi, Osaka 571-0050 (JP)
(72) Inventor: MORI, Akitoshi, Yokohama-shi, Kanagawa 225-0024 (JP); OTSUKI, Susumu, Yamato-shi, Kanagawa 242-0028 (JP); TOYODA, Ryuichi, Yokohama-shi, Kanagawa 230-0076 (JP); MORIMOTO, Kenji, Hirakata-shi, Osaka 573-0094 (JP)
(74) Representative: Grünecker, Kinkeldey, Stockmair & Schwanhäusser Anwaltssozietät
(86) International application number: JP0202697
(87) International publication number: WO02077783

(57) **Abstract**

A task of the present invention is to obtain a portable communication terminal capable of executing menu selection or display content retrieval in a short time by providing a direction resolution of a direction operating key.

In a portable communication terminal having a function of selecting a display menu displayed on a display section by a direction operating key operable in all the directions, a direction detecting section (32) for detecting the operation direction of the above-mentioned direction operating key (3), and a direction resolution controlling section (31) for judging the operation direction based on a signal from the direction detecting section (32), selecting the menu in the direction and displaying the same on the display section (2) are provided.

## Description

### Technical field

The present invention relates to a portable communication terminal having a display unit and an operation unit, more particularly, relates to a portable communication terminal capable of changing menu selection or display content by operating a direction operating key to an optional direction.

### Background of the Invention

In a portable communication terminal such as a portable phone, in general, a display menu is selected by operating the direction operating key based on display menus displayed on a display section. Moreover, when retrieval of a map, as an example of a content displayed by the menu selection, the map is moved. As a direction operating key for such an operation, various types of the direction operating key, such as a roller-like direction operating key and a direction operating key with switches disposed in four directions, are known.

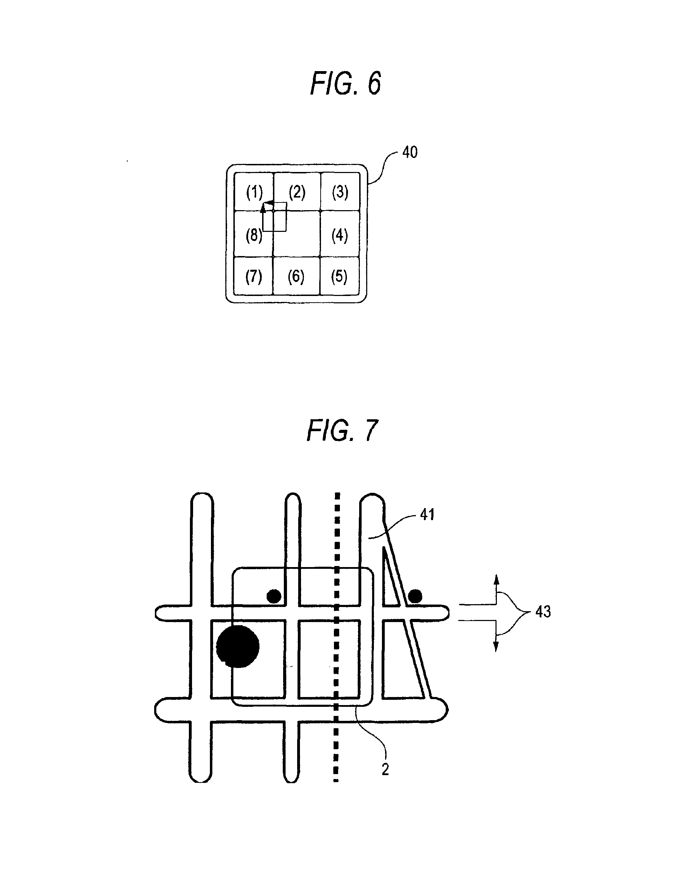

In the roller-like direction operating key, the operation is limited to upward and downward two directions due to the key function. Moreover, in the direction operating key with the switches disposed in four directions, the operation is inevitably limited to upward, downward, rightward and leftward four directions. Therefore, for example, in the case of selecting the menu in the oblique direction in a 9-split display menu 40 as shown in FIG. 6, a user has to operate the direction operating key in the vertical (lateral) direction first and then in the lateral (vertical) direction. For example, in the case of selecting the menu (1) in the example shown in the figure, after moving once to the menu (8) or (2), the menu (1) is selected. Therefore, a problem is involved in that the labor is required to that extent in the menu selecting operation.

Moreover, similarly in the case of moving a display part 2 in the oblique direction for retrieval in a map 41 as shown in FIG. 7, as shown by the arrow 43, a problem is involved in that the labor of operating first laterally (vertically) and then in the vertical (lateral) direction is required so that the retrieval is troublesome.

In order to solve the above-mentioned problems, the invention has been achieved, and an object thereof is to provide a portable communication terminal capable of easily executing menu selection or display content change by providing a direction a direction resolution to a direction operating key.

### Disclosure of the Invention

In order to solve the above-mentioned technological problems, the below-mentioned means are adopted in the invention.
(1) A portable communication terminal having a function of selecting a display menu displayed on a display section by a direction operating key operable in all the directions, characterized in that the portable communication terminal comprises a direction detecting section for detecting the operation direction of the above-mentioned direction operating key, and a direction resolution controlling section for judging the operation direction based on a signal from the direction detecting section, selecting the menu in the direction and displaying the same on the display section.
(2) A portable communication terminal having a function of changing the display content displayed on a display section by a direction operating key, characterized in that the portable communication terminal comprises a direction detecting section for detecting the operation direction of the above-mentioned direction operating key, and a direction resolution controlling section for judging the operation direction based on a signal from the direction detecting section, and changing the display content to the direction.
(3) The portable communication terminal mentioned in the above-mentioned (1) or (2), characterized in that the above-mentioned direction operating key comprises a ball rotatable on a pressure switch, rotating members disposed adjacently on four circumferential positions of the ball, and a sensor for detecting the rotation amount of the rotating members, for outputting a signal corresponding to the rotation direction of the ball from the sensor.
(4) The portable communication terminal mentioned in the above-mentioned (1) or (2), characterized in that the above-mentioned direction operating key comprises a resistor disposed on a conductor, movably in the up and down direction, and an operation button for operating the resistor such that plural points of the resistor are connected with a CPU via an analog switch for outputting a signal corresponding to the contact position of the resistor to the above-mentioned conductor from the conductor to the above-mentioned CPU.

### Brief Description of the Drawings

FIG. 1 is a block diagram showing an embodiment of a portable communication terminal of the invention;
FIG. 2 is an external appearance diagram of the portable communication terminal of the embodiment and an enlarged view of a display section;
FIG. 3 is a plan view showing an embodiment of a direction operating key;
FIG. 4 is a vertical cross-sectional side view of the direction operating key of FIG. 3;
FIG. 5 is a perspective view of another embodiment of a direction operating key;
FIG. 6 is an explanatory diagram showing a conventional menu selecting operation; and
FIG. 7 is an explanatory diagram showing a conventional display content changing operation.

In the figures, the numeral 2 denotes a display section, 3 denotes a direction operating key, 9 denotes a center switch, 10 denotes a ball, 12 denotes a shaft (swaying member), 15 denotes a Hall element (sensor), 17 denotes a conductor, 18 denotes a resistor, 19 denotes an operation button, 31 denotes a direction resolution controlling section, and 32 denotes a direction detecting section.

### Best Mode for Carrying Out the Invention

Hereinafter, preferable embodiments of portable communication terminals according to the invention will be explained based on the drawings.

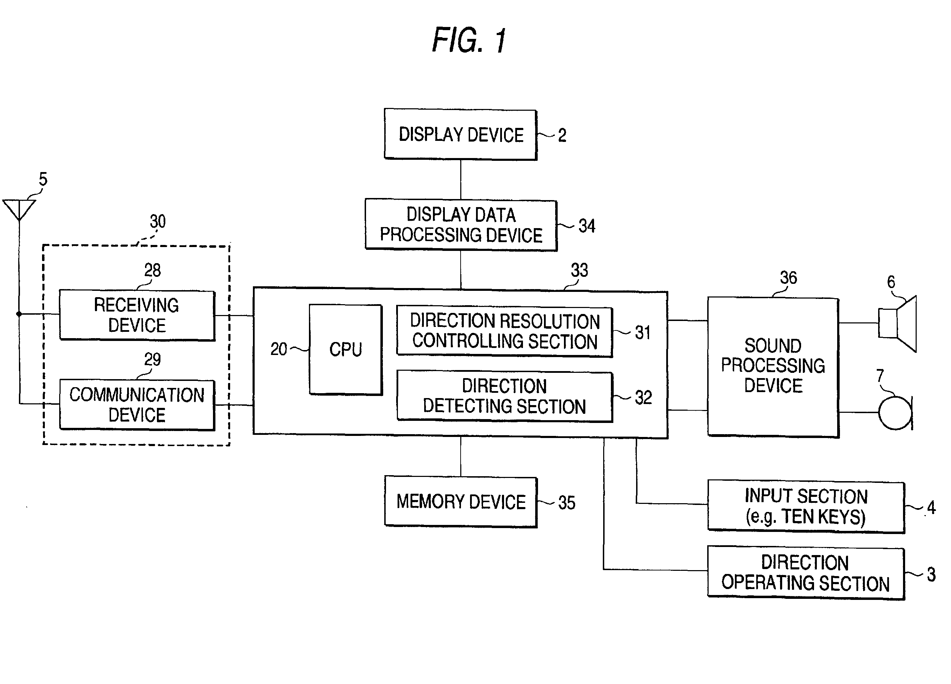

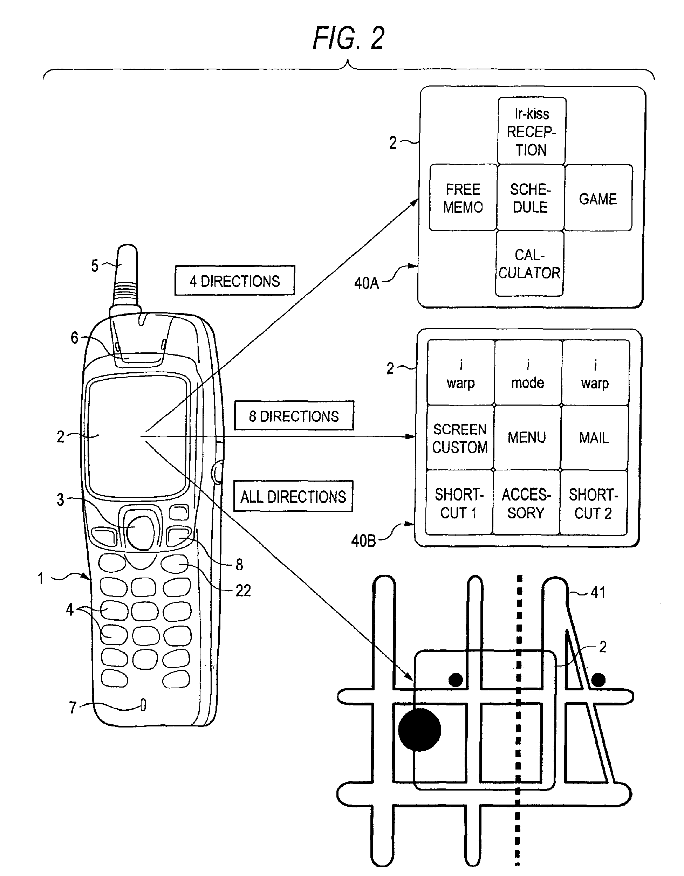

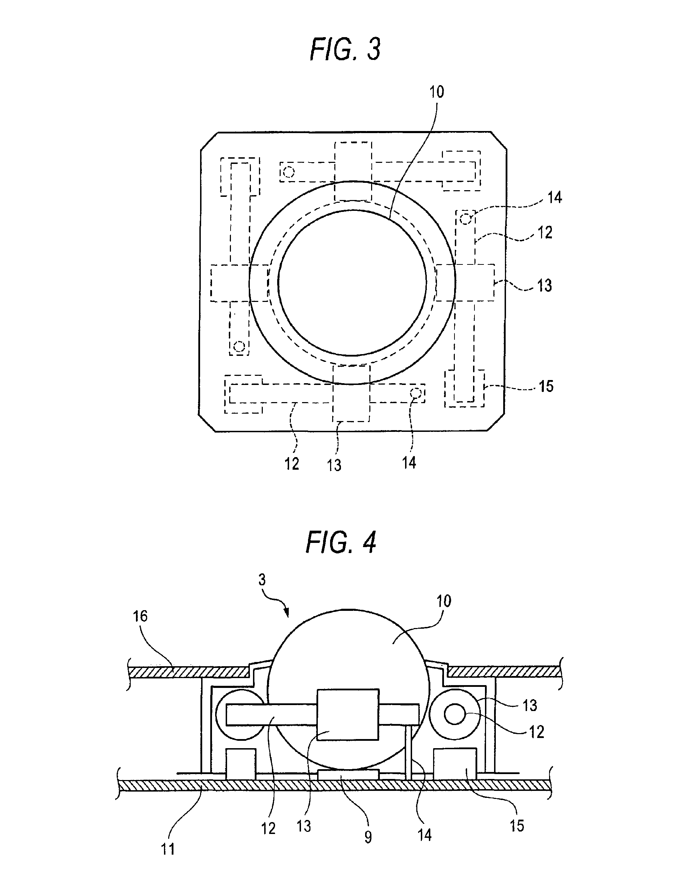

FIG. 1 is a block diagram of an embodiment of a portable communication terminal of the invention, FIG. 2 is an external appearance diagram of the portable communication terminal and an enlarged view of a display section, FIG. 3 is a plan view of a direction operating key, and FIG. 4 is a vertical cross-sectional side view of the direction operating key of FIG. 3.

In FIG. 2, the portable communication terminal includes a display section 2, a direction operating key 3, basic information keys (ten keys) 4, an antenna 5, a speaker 6, a microphone 7, a function key 8 and a power source switch 22 in a main body 1.

FIG. 3 shows an embodiment of the direction operating key, and the direction operating key 3 in this embodiment has a ball 10. The ball 10 is rotatably disposed on a center switch 9 including a pressure switch provided on a substrate 11 of the main body 1. Rollers 13 provided on a shaft 12 including a magnet, are provided adjacently on four circumferential positions of the ball 10. The base end of the shafts 12 is rotatably supported via a supporting shaft 14, with the tip end of the shafts 12 facing a Hall element 15. According to rotation of the shafts 12, detection output from the Hall elements 15 is changed, and thereby the rotation direction of the ball 10 is detected. The numeral 16 denotes a cover.

By a pressing down operation of the ball 10, the center switch 9 is switched on. Then, by a rotating operation of the ball 10, the ball 10 is contacted with one or adjacent two rollers 13 in the direction of the rotation. According to the rotation direction, the shaft 12 including a magnet is rotated. The magnetic force change is detected by the facing Hall element 15 and the Hall element 15 outputs a pulse signal to the CPU 20 described later. According to calculation of the pulse signal, the rotation direction of the ball 10 can be detected.

The element for detecting the rotation of the shaft 12 may be an encoder or a mechanical switch in contact with the shaft 12, and thus it is not limited to the Hall element 15.

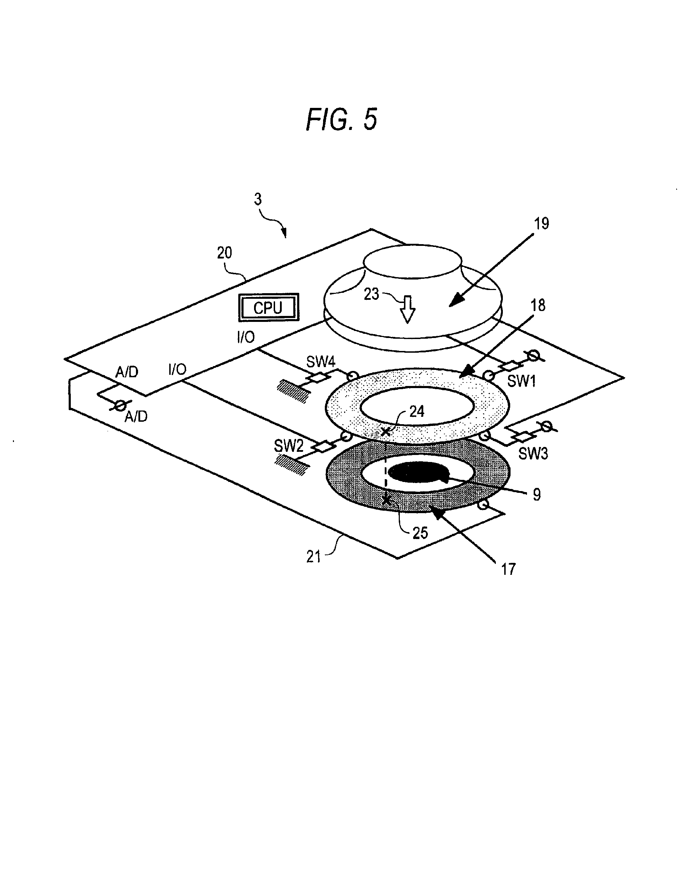

FIG. 5 shows another embodiment of the direction operating key 3, schematically including a conductor 17 around a center switch 9 on the substrate 11, a resistor 18 provided thereon, and an operation button 19 mounted on the resistor 18. The conductor 17 is connected with the CPU 20 via a lead line 21. Moreover, the resistor 18 is connected with the CPU 20 via four analog switches SW1 to SW4.

In the case an optional point of the operation button 19, for example, a part indicated by an arrow 23 is pressed down, the point 24 of the resistor 18 is contacted with the point 25 of the conductor 17, then electric current flows via the lead line 21 and is A/D converted by the CPU 20. Since the voltage values between the analog switches SW1 and SW2, and SW3 and SW4 differ depending on the contact point 24, 25 positions, the operation direction of the operation button 19 can be detected by calculating the voltage values by the CPU 20.

Moreover, the operation direction can also be detected by detecting the electrostatic capacity, or the likebyproviding the resistor 18 as a conductor without contacting with the conductor 17.

The direction operating key 3 may be of any type as long as it is a key capable of detecting the operation direction, and thus it is not limited to the structures of the above-mentioned embodiments shown in FIGS. 4 and 5.

FIG. 1 is a block diagram of a portable communication terminal according to the invention.

As shown in the figure, the portable communication terminal schematically includes a radio section 30 having a receiving device 28 and a transmitting device 29, a controlling device 33 having a CPU 20, a direction resolution controlling section 31 and a direction detecting section 32 for the entirety, a memory device 35, and a sound processing device 36 for processing the output to a speaker 6 and a microphone 7. Basic information keys 4 and a direction operating key 3 are connected with the controlling operation 33.

Next, operation of the portable communication terminal according to the invention will be explained.

By switching on the power source switch 22, the display section 2 is lit on so as to display a display menu as shown in FIG. 2. In FIG. 2, the display menu 40A in the uppermost part is a four direction menu, and the display menu 40B in the center part is an eight direction menu.

According to operation of the direction operating key 3, the direction detecting section 32 of the controlling device 34 detects the operation direction of the direction operating key 3 so that the menu in the operation direction is selected by the direction resolution controlling section 31 based on the detected signal. That is, a selected menu is displayed on the display section 2 by controlling the display data processing device 34 according to resolution in the 90 degree direction by the direction resolution controlling section 31 in the case of the four direction display menu 40A, or in the 45 degree direction by the direction resolution controlling section 31 in the case of the eight direction display menu 40B. That is, the menu in the operation direction (angle) operated by the direction operating key 3 is selected so that the selected menu can be switched and displayed on the display section 2.

The lowermost part of FIG. 2 shows the case of map information as the display content selected by the menu selection. In this case, map retrieval is executed by moving the map 41 by operating the direction operating key 3. According to the invention, since the map 41 can be moved in an optional direction according to resolution in all the directions by the direction resolution controlling section 31 by operating he direction operating key 3, the map retrieval can be executed quickly.

Although the invention has been explained with reference to specific embodiments in detail, it is apparent for those engaged in the art that various changes and modifications can be executed without escaping from the spirit and scope of the invention.

The present application is based on the Japanese Patent Application filed on March 23, 2001 (Patent Application No. 2001-85313), and the content thereof is referred to and taken in here.

### Industrial Applicability

As heretofore mentioned, according to the invention, since the direction resolution controlling section for judging the operation direction of the direction operating key operable in all the directions for selecting the menu in the direction and displaying the same on the display section is provided, menus can be selected directly by operating the direction operating key not only vertically and laterally but also in an optional oblique direction to all the directions so that an effect of improving the operativity of the portable communication terminal can be provided.

Moreover, according to the invention, since a direction resolution controlling section for judging the operation direction of the direction operating key operable in all the directions for changing the display content to the direction is provided, information can be retrieved by moving the display content in all the directions by operating the direction operating key not only vertically and laterally but also in an optional oblique direction to all the directions so that the retrieval speed can be improved.

## Claims

1. Aportable communication terminal having a function of selecting a display menu displayed on a display section by a direction operating key operable in all the directions, comprising:
a direction detecting section for detecting the operation direction of the direction operating key; and
a direction resolution controlling section for judging the operation direction based on a signal from the direction detecting section, selecting the menu in the direction, and allowing the display section to display the menu thereon.

2. Aportable communication terminal having a function of changing the display content displayed on a display section by a direction operating key, comprising:
a direction detecting section for detecting the operation direction of the direction operating key; and
a direction resolution controlling section for judging the operation direction based on a signal from the direction detecting section, and changing the display content to the direction.

3. The portable communication terminal as claimed in claim 1 or 2, wherein the direction operating key comprises:
a ball rotatable on a center switch;
rotation members disposed adjacently on four circumferential positions of the ball; and
a sensor for detecting the rotation amount of the rotation members to output a signal corresponding to the rotation direction of the ball from the sensor.

4. The portable communication terminal as claimed in claim 1 or 2,
wherein the direction operating key comprises : a resistor movably disposed on a conductor in up and down directions; and an operation button for operating the resistor,
wherein plural points of the resistor are connected with a CPU via an analog switch, and a signal corresponding to the contact position of the resistor and the conductor is output from the conductor to the CPU.
